# EUROPÄISCHE PATENTSCHRIFT

(11) **EP 3 599 738 B1**
(45) Veröffentlichungstag und Bekanntmachung des Hinweises auf die Patenterteilung: **06.09.2023**
(21) Anmeldenummer: 19184909.0
(22) Anmeldetag: 08.07.2019
(51) Int. Cl.: H04L 9/16, H04L 9/08, H04L 9/06, H04L 9/12

(54) **ERSTES FAHRZEUGSEITIGES ENDGERÄT, VERFAHREN ZUM BETREIBEN DES ERSTEN ENDGERÄTS, ZWEITES FAHRZEUGSEITIGES ENDGERÄT UND VERFAHREN ZUM BETREIBEN DES ZWEITEN FAHRZEUGSEITIGEN ENDGERÄTS**
FIRST VEHICLE SIDE TERMINAL, METHOD FOR OPERATING THE FIRST TERMINAL, SECOND VEHICLE SIDE TERMINAL AND METHOD FOR OPERATING THE SECOND VEHICLE SIDE TERMINAL
PREMIER TERMINAL COTÉ VÉHICULE, PROCÉDÉ DE FONCTIONNEMENT DU PREMIER TERMINAL, SECOND TERMINAL COTÉ VÉHICULE ET PROCÉDÉ DE FONCTIONNEMENT DU SECOND TERMINAL COTÉ VÉHICULE

(30) Priorität: 25.07.2018 DE 102018212361
(43) Veröffentlichungstag der Anmeldung: 29.01.2020
(73) Patentinhaber: Robert Bosch GmbH, 70442 Stuttgart (DE)
(72) Erfinder: Zimmermann, Christian, 70197 Stuttgart (DE); Bissmeyer, Norbert, 45525 Hattingen (DE)

(56) Entgegenhaltungen:
- DE-A1-102013 206 185
- DE-A1-102013 206 202
- US-A1- 2008 005 564
- US-A1- 2009 262 937
- US-A1- 2012 328 098

## Beschreibung

### Stand der Technik

Die Erfindung betrifft ein erstes fahrzeugseitiges Endgerät, ein Verfahren zum Betreiben des ersten Endgeräts, ein zweites fahrzeugseitiges Endgerät und ein Verfahren zum Betreiben des zweiten fahrzeugseitigen Endgeräts.

US 2012/328098 A1 offenbart Systeme und Methoden zur Erzeugung eines kryptografischen Sitzungsschlüssels auf der Grundlage eines bekannten Master-Schlüssels, der zwischen einem Senderkommunikator und einem Empfängerkommunikator in einem Kommunikationsnetz gemeinsam genutzt wird.

DE 10 2013 206202 A1 offenbart ein Sensormodul zur Erfassung mindestens einer physikalischen Größe. Das Sensormodul ist so konfiguriert, dass es Messwerte, die die mindestens eine physikalische Größe charakterisieren, an eine externe Einheit weiterleitet. Das Sensormodul ist so konfiguriert, dass es einen Nachrichten-Authentifizierungscode bildet und diesen an die externe Einheit weiterleitet. Der Nachrichten-Authentifizierungscode ermöglicht die Überprüfung der Authentizität und Integrität mindestens eines Messwertes.

US 2009/262937 A1 offenbart ein System zur Entschlüsselung von Datenframes in einem passiven optischen Ethernet-Netzwerk.

DE 10 2013 206185 A1 offenbart ein Verfahren zum Erkennen einer Manipulation von übertragenen Sensordaten.

US 2008/005564 A1 offenbart ein Verfahren zur Verwaltung eines Schlüssels für die verschlüsselte Kommunikation über eine Kommunikationsverbindung zwischen einem ersten und einem zweiten Modem, wobei jedes Modem einen ersten und einen zweiten Hauptschlüssel hat.

### Offenbarung der Erfindung

Die Probleme des Standes der Technik werden durch ein erstes fahrzeugseitiges Endgerät nach dem Anspruch 1, ein Verfahren zum Betreiben des ersten Endgeräts nach einem nebengeordneten Anspruch, ein zweites fahrzeugseitiges Endgerät nach einem nebengeordneten Anspruch und ein Verfahren zum Betreiben des zweiten fahrzeugseitigen Endgeräts nach einem nebengeordneten Anspruch gelöst.

Gemäß einem ersten Aspekt dieser Beschreibung wird ein erstes fahrzeugseitiges Endgerät einer Gruppe von Endgeräten eines Funkkommunikationsnetzwerks bereitgestellt. Das erste fahrzeugseitige Endgerät umfasst mindestens einen Prozessor, mindestens einen Speicher mit Computerprogrammcode, mindestens ein Kommunikationsmodul und mindestens eine Antenne. Der Computerprogrammcode ist so konfiguriert, dass er mit dem mindestens einen Prozessor, dem mindestens einen Kommunikationsmodul und der mindestens einen Antenne bewirkt, dass das erste fahrzeugseitige Endgerät einen symmetrischen Schlüssel ermittelt, einen Eingangswert zufallsbasiert ermittelt, eine erste Nachricht umfassend den symmetrischen Schlüssel und den Eingangswert in Richtung eines zweiten fahrzeugseitigen Endgeräts versendet, einen Sitzungsschlüssel in Abhängigkeit von dem symmetrischen Schlüssel und in Abhängigkeit von dem Eingangswert ermittelt, den ermittelten Sitzungsschlüssel als aktuell gültigen Sitzungsschlüssel auswählt, eine zweite Nachricht umfassend verschlüsselte Daten ausgehend von dem zweiten fahrzeugseitigen Endgerät empfängt, und unverschlüsselte Daten in Abhängigkeit von den verschlüsselten Daten und dem aktuell gültigen Sitzungsschlüssel ermittelt.

Der Sitzungsschlüssel wird vorteilhaft von jedem Endgerät einer Gruppe von Endgeräten selbstständig und lokal in Abhängigkeit von dem symmetrischen Schlüssel ermittelt, womit gegenüber asymmetrischen Verschlüsselungsverfahren Vorteile hinsichtlich des Rechenaufwands und hinsichtlich der resultierenden Größe der verschlüsselten Daten erreicht werden. Durch die Reduktion der Datengröße ergeben sich verringerte Latenzen, was insbesondere für kolonnenfahrende Fahrzeuge, einem sogenannten Platoon, bedeutet, dass Sicherheitsabstände zwischen den Fahrzeugen verringert werden können. Folglich ergeben sich aufgrund der verbesserten Ausnutzung des Windschattens vorausfahrender Fahrzeuge Potenziale zur Einsparung von Treibstoff bzw. Antriebsenergie.

Ein vorteilhaftes Beispiel zeichnet sich dadurch aus, dass das erste Endgerät die erste Nachricht über einen ersten gesicherten Kommunikationskanal in Richtung des zweiten Endgeräts versendet, und die zweite Nachricht über einen zweiten gesicherten Kommunikationskanal empfängt.

Folglich wird ein hybrides Sicherungs- und Authentifikationssystem bereitgestellt, um Nachrichtenübertragungen zu verbessern. Aufbauend auf dem ersten gesicherten Kommunikationskanal mit Authentifizierungs- und Sicherungsmechanismen wird ein zweiter gesicherter Kommunikationskanal mit geringerem Kommunikations-Overhead bereitgestellt.

Der symmetrische Schlüssel wird vorteilhaft über den ersten gesicherten Kommunikationskanal ausgetauscht und anschließend der zweite Kommunikationskanal mittels einer Verschlüsselung auf Basis des Sitzungsschlüssels zu nutzen. Vorteilhaft werden die empfangenen verschlüsselten Daten mittels des Sitzungsschlüssels gegen Manipulation und Abhören gesichert. Diejenigen Sicherungsmechanismen, welche verwendet werden, um die erste Nachricht gegen Manipulation und Abhören zu sichern, werden zur effizienteren Direktkommunikation zwischen dem ersten und zweiten Endgerät über den zweiten Kommunikationskanal durch die Verschlüsselung mit dem Sitzungsschlüssel ersetzt.

Ein vorteilhaftes Beispiel zeichnet sich dadurch aus, dass das erste Endgerät mittels einer ersten Kennung als aktuell gültige Kennung adressiert wird, und dass das erste Endgerät einen zweiten Eingangswert in Abhängigkeit von dem ermittelten Eingangswert ermittelt, einen zweiten Sitzungsschlüssel in Abhängigkeit von dem symmetrischen Schlüssel und in Abhängigkeit von dem zweiten Eingangswert ermittelt, eine zweite Kennung zur Adressierung des ersten fahrzeugseitigen Endgeräts mit dem aktuell gültigen Sitzungsschlüssel verschlüsselt, wenigstens die zweite verschlüsselte Kennung in Richtung des zweiten Endgeräts versendet, den zweiten Sitzungsschlüssel als aktuell gültigen Sitzungsschlüssel und die zweite Kennung als aktuell gültige Kennung des ersten Endgeräts auswählt, zweite verschlüsselte Daten mit der zweiten Kennung als Empfangsadresse ausgehend von dem zweiten fahrzeugseitigen Endgerät empfängt, und zweite unverschlüsselte Daten in Abhängigkeit von den zweiten verschlüsselten Daten und dem aktuell gültigen Sitzungsschlüssel ermittelt.

Damit findet vorteilhaft ein synchroner Wechsel von Sitzungsschlüssel und Kennung statt, womit die Nachverfolgung einer Identität des ersten Endgeräts erschwert wird. Folglich wird der Schutz der Identität des Endgeräts und damit des Fahrzeugs gewährleistet. Ein Vorhalten einer Anzahl von entsprechenden Zertifikaten für unterschiedliche Kennungen des Endgeräts kann für eine Intra-Platoon-Kommunikation entfallen, was zu einem verringerten Aufwand für den Wechsel der Kennungen der Endgeräte führt. Die Änderung des Eingangswerts führt zu einer Ermittlung des zweiten Sitzungsschlüssels unter reduziertem Berechnungsaufwand. Der Wechsel des Sitzungsschlüssels zur Ver- und Entschlüsselung der ausgetauschten Daten verbessert die Vertraulichkeit der Kommunikation. Die Nachverfolgbarkeit einzelner Platoon-Mitglieder wird durch Wechseln der Schlüsselkennung erschwert.

Ein vorteilhaftes Beispiel zeichnet sich dadurch aus, dass das erste Endgerät wenigstens eine Wechsel-Nachricht an die Endgeräte der Gruppe über den zweiten Kanal versendet oder die Wechsel-Nachricht von einem der Endgeräte der Gruppe empfängt, wobei die Wechsel-Nachricht einen Wechsel-Zeitpunkt zum geplanten Wechsel des Sitzungsschlüssels und der Kennung indiziert, und die Auswahl des zweiten Sitzungsschlüssels und der zweiten Kennung zu dem Wechsel-Zeitpunkt durchführt.

Folglich stimmen die Endgeräte einen idealerweise synchronen Wechsel des Sitzungsschlüssels und der individuellen Kennung untereinander ab, wobei bevorzugt alle Kennungen, also auch die auf den niedrigeren Schichten, gewechselt werden.

Ein vorteilhaftes Beispiel zeichnet sich dadurch aus, dass das erste Endgerät eine Aufnahme-Nachricht, welche eine potenzielle Aufnahme eines weiteren Endgeräts in die Gruppe indiziert, empfängt, die Auswahl des zweiten Sitzungsschlüssels und der zweiten Kennung nach dem Empfang der Aufnahme-Nachricht so lange aussetzt, bis das weitere Endgerät in die Gruppe aufgenommen ist oder eine vorbestimmte Zeitdauer abgelaufen ist.

Vorteilhaft können auf diese Art und Weise weitere Endgeräte in die Gruppe aufgenommen werden, um anschließend den Wechsel der Sitzungsschlüssel und der Kennungen weiterzuführen.

Ein vorteilhaftes Beispiel zeichnet sich dadurch aus, dass die zweite Nachricht eine Schlüsselkennung umfasst, und dass das erste Endgerät ein Sitzungsschlüssel einer Anzahl von Sitzungsschlüsseln in Abhängigkeit von der Schlüsselkennung auswählt, und die unverschlüsselten Daten in Abhängigkeit von den verschlüsselten Daten und dem ausgewählten Sitzungsschlüssel ermittelt.

Vorteilhaft findet ein Entschlüsselungsvorgang mit dem aktuell gültigen Schlüssel nur dann statt, wenn der aktuell gültige Schlüssel gemäß der Prüf-Kennung zu den verschlüsselten Daten passt. Damit wird der Rechenaufwand soweit reduziert, dass innerhalb einer determinierbaren Zeitdauer sicher feststeht, ob die empfangenen verschlüsselten Daten entschlüsselt werden können oder nicht. Gemäß einem zweiten Aspekt dieser Beschreibung wird ein Verfahren zum Betreiben eines ersten fahrzeugseitigen Endgeräts einer Gruppe von Endgeräten eines Funkkommunikationsnetzwerks bereitgestellt, wobei das Verfahren umfasst: Ermitteln eines symmetrischen Schlüssels, zufallsbasiertes Ermitteln eines Eingangswerts, Versenden einer erste Nachricht umfassend den symmetrischen Schlüssel und den Eingangswert in Richtung eines zweiten fahrzeugseitigen Endgeräts, Ermitteln eines Sitzungsschlüssels in Abhängigkeit von dem symmetrischen Schlüssel und in Abhängigkeit von dem Eingangswert, Auswählen des ermittelten Sitzungsschlüssels als aktuell gültigen Sitzungsschlüssel, Empfangen einer zweiten Nachricht umfassend verschlüsselte Daten ausgehend von dem zweiten fahrzeugseitigen Endgerät, und Ermitteln von unverschlüsselten Daten in Abhängigkeit von den verschlüsselten Daten und dem aktuell gültigen Sitzungsschlüssel.

Gemäß einem dritten Aspekt dieser Beschreibung wird ein zweites fahrzeugseitiges Endgerät mit mindestens einen Prozessor, mindestens einen Speicher mit Computerprogrammcode, mindestens ein Kommunikationsmodul und mindestens eine Antenne bereitgestellt, wobei der Computerprogrammcode so konfiguriert ist, dass er mit dem mindestens einen Prozessor, dem mindestens einen Kommunikationsmodul und der mindestens einen Antenne bewirkt, dass das zweite fahrzeugseitige Endgerät eine erste Nachricht umfassend einen symmetrischen Schlüssel und einen Zufallswert ausgehend von einem ersten fahrzeugseitigen Endgerät empfängt, einen Sitzungsschlüssel in Abhängigkeit von dem symmetrischen Schlüssel und in Abhängigkeit von dem Eingangswert ermittelt, den ermittelten Sitzungsschlüssel als aktuell gültigen Sitzungsschlüssel auswählt, unverschlüsselte Daten ermittelt, verschlüsselte Daten in Abhängigkeit von den unverschlüsselten Daten und dem aktuell gültigen Sitzungsschlüssel ermittelt, und eine zweite Nachricht umfassend die verschlüsselte Daten in Richtung des ersten fahrzeugseitigen Endgeräts versendet.

Ein vorteilhaftes Beispiel zeichnet sich dadurch aus, dass das zweite Endgerät die erste Nachricht über einen ersten gesicherten Kommunikationskanal empfängt, und die zweite Nachricht über einen zweiten gesicherten Kommunikationskanal versendet.

Ein vorteilhaftes Beispiel zeichnet sich dadurch aus, dass das zweite Endgerät einen zweiten Eingangswert in Abhängigkeit von dem empfangenen Eingangswert ermittelt, einen zweiten Sitzungsschlüssel in Abhängigkeit von dem symmetrischen Schlüssel und in Abhängigkeit von einem zweiten Eingangswert ermittelt, eine zweite verschlüsselte Kennung empfängt, eine zweite unverschlüsselte Kennung zur Adressierung des ersten fahrzeugseitigen Endgeräts in Abhängigkeit von der zweiten verschlüsselten Kennung und in Abhängigkeit von dem aktuell gültigen Sitzungsschlüssel ermittelt, den zweiten Sitzungsschlüssel als aktuell gültigen Sitzungsschlüssel auswählt, zweite unverschlüsselte Daten ermittelt, zweite verschlüsselte Daten in Abhängigkeit von den zweiten unverschlüsselten Daten und dem aktuell gültigen Sitzungsschlüssel ermittelt, und zweite verschlüsselte Daten mit der zweiten Kennung des ersten Endgeräts als Empfangsadresse in Richtung des ersten Endgeräts versendet.

Ein vorteilhaftes Beispiel zeichnet sich dadurch aus, dass das zweite Endgerät wenigstens eine Wechsel-Nachricht an die Endgeräte der Gruppe über den zweiten Kanal über den zweiten Kommunikationskanal versendet oder die Wechsel-Nachricht von einem der Endgeräte der Gruppe über den zweiten Kommunikationskanal empfängt, wobei die Wechsel-Nachricht einen Wechsel-Zeitpunkt zum geplanten Wechsel des Sitzungsschlüssels und der Kennung indiziert, und die Auswahl des zweiten Sitzungsschlüssels und der zweiten Kennung zu dem Wechsel-Zeitpunkt durchführt.

Ein vorteilhaftes Beispiel zeichnet sich dadurch aus, dass das zweite Endgerät eine Schlüsselkennung in Abhängigkeit von dem aktuell gültigen Sitzungsschlüssel ermittelt, mit dem aktuell gültigen Sitzungsschlüssel verschlüsselte Daten gemeinsam mit einer Schlüsselkennung über den zweiten gesicherten Kommunikationskanal in Richtung des ersten fahrzeugseitigen Endgeräts versendet.

Gemäß einem vierten Aspekt wird ein Verfahren zum Betreiben eines zweiten Endgeräts eines Funkkommunikationsnetzwerks bereitgestellt, wobei das Verfahren umfasst: Empfangen einer ersten Nachricht umfassend einen symmetrischen Schlüssel und einen Zufallswert ausgehend von einem ersten fahrzeugseitigen Endgerät, Ermitteln eines Sitzungsschlüssels in Abhängigkeit von dem symmetrischen Schlüssel und in Abhängigkeit von dem Eingangswert, Auswählen des ermittelten Sitzungsschlüssels als aktuell gültigen Sitzungsschlüssel, Ermitteln von unverschlüsselten Daten, Ermitteln von verschlüsselten Daten in Abhängigkeit von den unverschlüsselten Daten und dem aktuell gültigen Sitzungsschlüssel, und Versenden einer zweiten Nachricht umfassend die verschlüsselte Daten in Richtung des ersten fahrzeugseitigen Endgeräts.

In der Zeichnung zeigen:
- Figur 1: in schematischer Form ein Funkkommunikationsnetzwerk;
- Figur 2: ein schematisches Sequenzdiagramm;
- Figur 3: ein schematisches Sequenzdiagramm;
- Figur 4: ein schematisches Blockdiagramm zur Ermittlung und Verarbeitung einer Nachricht;
- Figur 5: ein weiteres schematisches Blockdiagramm zur Ermittlung des Sitzungsschlüssels;
- Figur 6: ein schematisches Sequenzdiagramm zur Aufnahme eines Endgeräts in einen Platoon; und
- Figur 7: ein schematisches Sequenzdiagramm zur Intra-Platoon-Kommunikation.

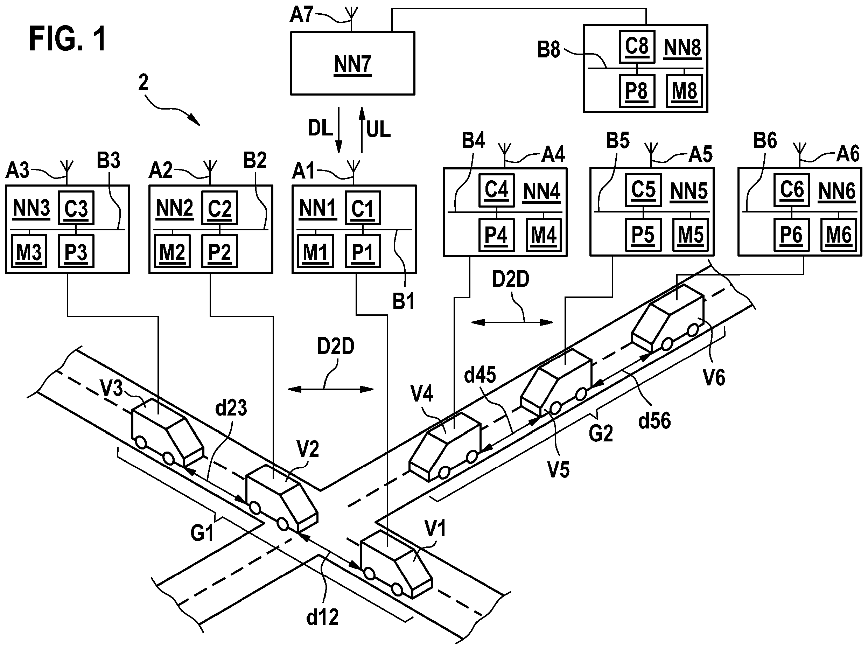

Figur 1 zeigt in schematischer Form ein Funkkommunikationsnetzwerk 2. Eine erste Gruppe G1 von Fahrzeugen V1, V2 und V3 kommuniziert mittels eines jeweiligen fahrzeugseitigen Endgeräts NN1 bis NN3 über wenigstens eine beispielsweise exklusiv zugewiesene D2D-Funkressource D1 (D2D: Device to Device) und koordiniert beispielsweise den Fahrzeugabstand d12, d23 sowie Brems- und Beschleunigungsmanöver des jeweiligen Fahrzeugs V1 bis V3. Eine zweite Gruppe G2 von Fahrzeugen V4, V5 und V6 kommuniziert mittels eines jeweiligen fahrzeugseitigen Endgeräts NN4 bis NN6 über wenigstens eine exklusiv zugewiesene D2D-Funkressource D2 und koordiniert beispielsweise den Fahrzeugabstand d45, d56 sowie Brems- und Beschleunigungsmanöver des jeweiligen Fahrzeugs V4 bis V6. Die wenigstens eine D2D-Funkressource D1, D2 ist beispielsweise durch eine Periodizität von zugewiesenen Bereichen in einem Zeit- und Frequenzraster gekennzeichnet. Durch das Auseinanderfallen der D2D-Funkressourcen D1 und D2 wird die Kommunikation der Gruppen G1 und G2 nicht gegenseitig beeinflusst, obschon sich die Funkreichweiten der beiden Gruppen G1 und G2 überschneiden, d. h., dass das Endgerät NN6 beispielsweise Nachrichten vom Endgerät NN3 empfangen könnte.

Die Endgeräte NN1 bis NN6 unterstützen neben der direkten Kommunikation untereinander die Fähigkeit innerhalb eines zell-gestützten Netzwerks über Uplink-Funkressourcen UL Nachrichten in Richtung einer Infrastruktureinheit NN7, wie beispielsweise einem Remote-Radio-Head, RRH, oder einer Basisstation, eNodeB, zu senden sowie Nachrichten über Downlink-Funkressourcen DL von der Infrastruktureinheit NN7 zu empfangen. Die Uplink- und Downlinkressourcen UL, DL werden zentral beispielsweise von der Infrastruktureinheit NN7 zugewiesen d. h. gescheduled. Die Infrastruktureinheit NN7 umfasst eine Antenne A7. Die Infrastruktureinheit NN7 ist mit der Netzwerkeinheit NN8 zur Kommunikation verbunden. Die D2D-Funkressourcen D1, D2 werden auch als Sidelink-Ressourcen bezeichnet. Die fahrzeugseitigen Endgeräte NN1 bis NN6 nutzen die D2D-Funkressourcen D1, D2, welche nicht zell-gestützt vergeben d.h. gescheduled werden. Sollte LTE-V2X D2D verwendet werden, besteht auch die Möglichkeit von Scheduling des Sidelink mittels einer zentralen Einheit über einen Downlink-Kontrollkanal.

Die fahrzeugseitigen Endgeräte NN1 bis NN6 umfassen jeweils einen Prozessor P1-P6, ein Kommunikationsmodul C1-C6, eine Antenne A1-A6 und einen Speicher M1-M6. Der Speicher M1-M6 ist jeweils mit einem Computerprogrammcode ausgestattet, der so konfiguriert ist, dass er mit dem mindestens einen Prozessor P1-P6, dem mindestens einen Kommunikationsmodul C1-C6 und der mindestens einen Antenne A1-A6 die in dieser Spezifikation beschriebenen Schritte ausführt. In einem Beispiel verfügen die Kommunikationsmodule C1-C6 über ein in Hardware ausgeführtes Security-Modul zum sicheren Speichern von kryptgraphische Daten.

Die Netzwerkeinheit NN8, umfasst einen Prozessor P8, ein Kommunikationsmodul C8, und einen Speicher M8. Der Speicher M8 ist mit einem Computerprogrammcode ausgestattet, der so konfiguriert ist, dass er mit dem mindestens einen Prozessor P8 und dem mindestens einen Kommunikationsmodul C8 die in dieser Spezifikation beschriebenen Schritte ausführt.

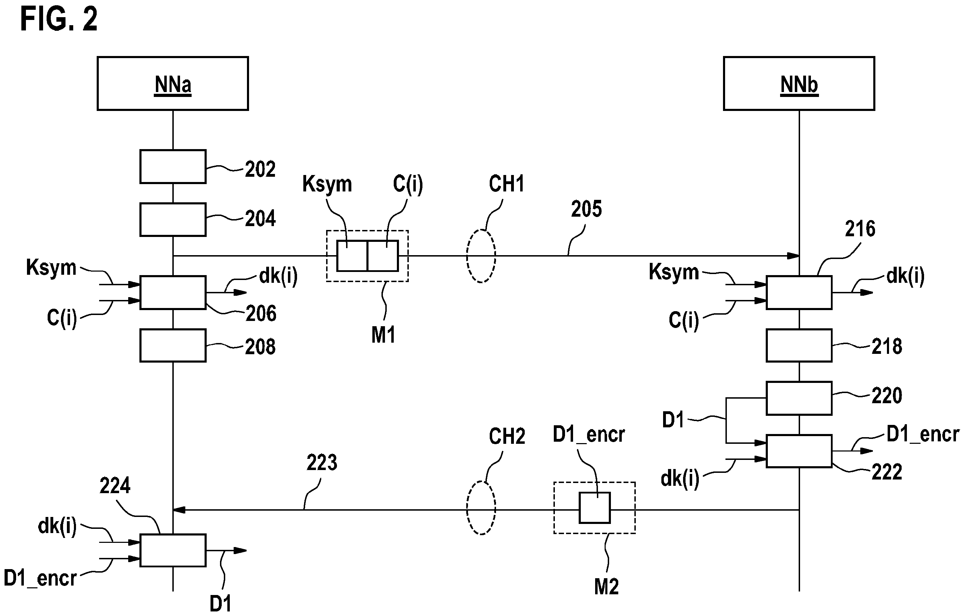

Figur 2 zeigt ein schematisches Sequenzdiagramm. Ein erstes fahrzeugseitiges Endgerät NNa ermittelt in einem Schritt 202 einen symmetrischen Schlüssel Ksym nach dem Zufallsprinzip. In einem Schritt 204 ermittelt das erste fahrzeugseitige Endgerät NNa einen Eingangswert C nach dem Zufallsprinzip. Sowohl der symmetrische Schlüssel Ksym als auch der Eingangswert C haben eine jeweilige zuvor spezifizierte Größe. Das Endgerät NNa versendet gemäß einem Pfeil 205 auf einem gesicherten Kanal CH1 eine erste Nachricht M1 umfassend den symmetrischen Schlüssel Ksym und den Eingangswert C in Richtung eines zweiten fahrzeugseitigen Endgeräts NNb. In einem Schritt 206 wird von dem ersten Endgerät NNa ein Sitzungsschlüssel dk(i) in Abhängigkeit von dem symmetrischen Schlüssel Ksym und dem Eingangswert C(i) ermittelt, wobei i eine Zählvariable ist. Im Schritt 208 wählt das erste Endgerät NNa den ermittelten Sitzungsschlüssel dk(i) als aktuell gültigen Sitzungsschlüssel aus. Die Nachricht M1 umfasst beispielsweise eine Indikation zur Berechnung eines aktuell gültigen Eingangswerts C(i), d. h. eine Indikation der Berechnungsvorschrift.

In einem Schritt 216 wird von dem zweiten Endgerät NNb der Sitzungsschlüssel dk(i) in Abhängigkeit von dem symmetrischen Schlüssel Ksym und dem Eingangswert C(i) ermittelt. Im Schritt 218 wählt das zweite Endgerät NNb den ermittelten Sitzungsschlüssel dk(i) als aktuell gültigen Sitzungsschlüssel aus.

Das zweite Endgerät NNb ermittelt in einem Schritt 220 unverschlüsselte Daten D1, welche an das erste Endgerät NNa übermittelt werden sollen. In einem Schritt 222 werden verschlüsselte Daten D1_encr in Abhängigkeit von den unverschlüsselten Daten D1 und in Abhängigkeit von dem aktuell gültigen Sitzungsschlüssel dk(i) ermittelt.

Gemäß einem Pfeil 223 versendet das zweite Endgerät NNb eine zweite Nachricht M2 umfassend die verschlüsselten Daten D1_encr auf einem gesicherten Kanal CH2 an das erste Endgerät NNa. Gemäß einem Schritt 224 ermittelt das erste Endgerät NNa die unverschlüsselten Daten D1 in Abhängigkeit von den empfangenen verschlüsselten Daten D1_encr und dem aktuell gültigen Sitzungsschlüssel dk (i).

Der zweite Kommunikationskanal CH2 wird durch den Schritt 222 charakterisiert, welcher mittels des aktuell gültigen Sitzungsschlüssels dk(i) die Daten D1 verschlüsselt. Zur Sicherung der Nachricht M2 in Bezug auf Vertraulichkeit und Authentizität wird ein Verfahren zur "Authenticated Encryption" verwendet. Sämtliche über den ersten oder zweiten Kommunikationskanal CH1, CH2 ausgetauschten Nachrichten umfassen einen auf Senderseite eingefügten Zeitstempel, der auf Empfängerseite verifiziert wird, um sogenannte Replay-Attacken zu verhindern.

Unter einem Kommunikationskanal ist in dieser Beschreibung ein Informationskanal zwischen 2 Netzwerkeinheiten zu verstehen, welcher durch beidseitig erforderliche Maßnahmen Vertraulichkeit und Authentizität der über den Kommunikationskanal versendeten Nachricht gewährleistet. Unterscheiden sich die Maßnahmen zur Vertraulichkeit und/oder Authentizität, so unterscheiden sich auch die Kommunikationskanäle.

In einem Beispiel unterscheiden sich die Kanäle CH1 und CH2 in der Art der Bereitstellung der Authentizität und der Vertraulichkeit. Zur Sicherstellung der Authentizität der versandten Daten über den Kanal CH1 werden Daten mit einem zentral verwalteten Zertifikat des Endgeräts signiert (Siehe beispielsweise das Dokument ETSI TS 102 940 mit Veröffentlichungsdatum 2018-04-01, wobei das Dokument durch Bezugnahme in diese Beschreibung aufgenommen ist). Oder die zu versendenden Daten werden mit einem ETSI ITS Authorization Ticket unter Verwendung eines Elliptic Curve Digital Signature Algorithm (ECDSA) signiert (Siehe beispielsweise das Dokument ETSI TS 103 097 mit Veröffentlichungsdatum 2017-10-01, wobei das Dokument durch Bezugnahme in diese Beschreibung aufgenommen ist).

In einem weiteren Beispiel wird über zell-basiertes Mobilfunknetz die Authentizität der Nachricht gewährleistet, wobei das jeweilige Endgerät sich gegenüber einem Mobile Network Operator, MNO, mittels eines Pre-Shared Key (PSK) sowie mittels Informationen bezüglich einer Platoon-Autorisierung identifiziert (siehe beispielsweise das Dokument 3GPP TS 33.401; upload date 2018-01-04, welches durch Bezugnahme in diese Beschreibung aufgenommen ist). Der MNO teilt das Ergebnis der Authentifizierung des ersten Endgeräts NNa dem zweiten Endgerät NNb mit. Die Nachricht M1 würde mittels asymmetrischer oder hybrider Ende-zu-Ende-Verschlüsselung über den MNO an das zweite Endgerät NNb geschickt. Alternativ wird eine Sicherung des Nachrichtenflusses der Nachricht M1 zwischen dem ersten Endgerät NNa und dem MNO sowie zwischen den MNO und dem zweiten Endgerät NNa auf Transportschicht-Ebene beispielsweise mittels TLS-PSK (Transport Layer Security pre-shared key ciphersuites) bereitgestellt.

Zur Verschlüsselung des Nachrichteninhalts der Nachricht M1 auf dem Kanal CH1 wird beispielsweise AES-CCM (Advanced Encryption Standard Counter Mode) verwendet (Siehe beispielsweise das Dokument ETSI TS 103 097; Veröffentlichungsmonat 2017-10, wobei das Dokument durch Bezugnahme in diese Beschreibung aufgenommen ist). Das Verfahren gewährleistet nicht nur Vertraulichkeit, sondern auch Authentizität. In Verbindung mit den oben genannten Zertifikaten kann also bspw. AES-CCM im Rahmen von ECIES verwendet werden. Selbstverständlich können auch andere Ver- und Entschlüsselungsmethoden wie beispielsweise aus dem Dokument 3GPP TS 33.401 mit Upload-Datum 2018-01-04, welches durch Bezugnahme in diese Beschreibung aufgenommen ist, verwendet werden.

In einem weiteren Beispiel entspricht der erste Kanal CH1 dem zweiten Kanal CH2. Insbesondere bei einem nachfolgend beschriebenen nahezu synchronen Wechsel des symmetrischen Schlüssels Ksym sind die beiden Kanäle CH1 und CH2 gleich.

In einem Beispiel ist das erste Endgerät NNa das Endgerät NN1 oder NN4 aus Figur 1 und das zweite Endgerät NNb ist eines der Endgeräte NN2, NN3, NN5 oder NN6 aus Figur 1. Folglich ist das erste Endgerät NNa eine Komponente des sogenannten Platoon-Leaders also des führenden Fahrzeugs der Kolonne. Das zweiten Endgerät NNb ist folglich eine Komponente eines der den Platoon-Leader folgenden Fahrzeuge.

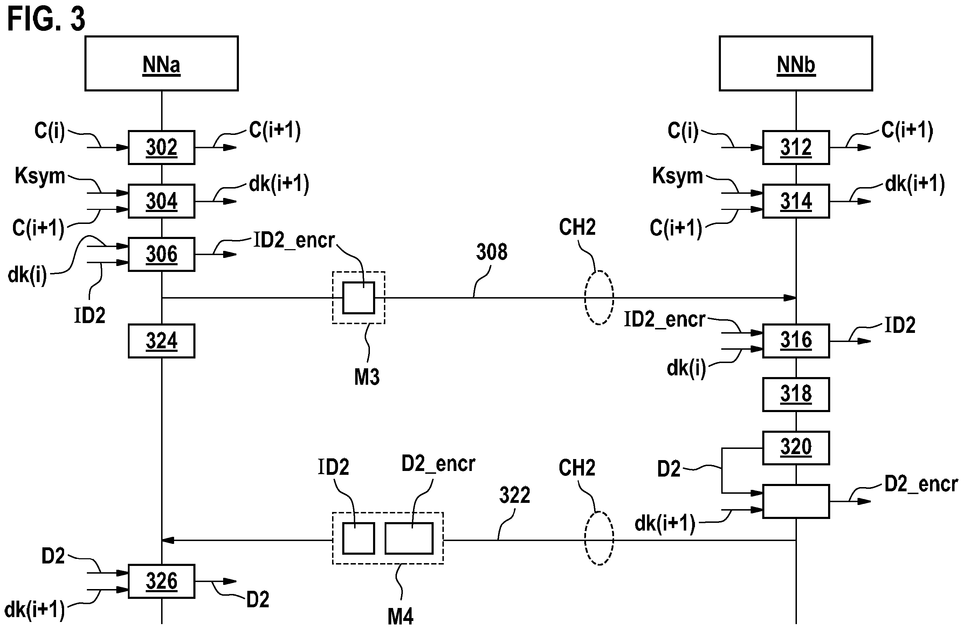

Figur 3 zeigt ein schematisches Sequenzdiagramm. In einem Schritt 302 ermittelt das erste Endgerät NNa einen zweiten Eingangswert C(i+1) in Abhängigkeit von dem ersten Eingangswert C(i), was beispielsweise durch Inkrementierung des ersten Eingangswerts C(i) erfolgt. In einem Schritt 304 wird ein zweiter Sitzungsschlüssel dk (i +1) in Abhängigkeit von dem symmetrischen Schlüssel Ksym und dem zweiten Eingangswert C(i+1) ermittelt. Das erste Endgerät NNa wird mittels einer ersten Kennung adressiert. Eine noch nicht in Benutzung befindliche zweite Kennung ID2 wird in einem Schritt 306 verschlüsselt. Die zweite verschlüsselte Kennung ID2_encr wird als Teil einer dritten Nachricht M3 gemäß einem Pfeil 308 über den zweiten Kanal CH2 an das zweite Endgerät NNb versendet.

In einem Schritt 312 ermittelt das zweite Endgerät NNb den zweiten Eingangswert C(i+1) in Abhängigkeit von dem ersten Eingangswert C(i), was beispielsweise durch Inkrementierung des ersten Eingangswerts C(i) erfolgt. In einem Schritt 314 wird der zweite Sitzungsschlüssel dk(i+1) in Abhängigkeit von dem symmetrischen Schlüssel Ksym und dem zweiten Eingangswert C(i+1) ermittelt.

Die zweite unverschlüsselte Kennung ID2 zur Adressierung des ersten fahrzeugseitigen Endgeräts NNa wird vom zweiten Endgerät NNb in einem Schritt 316 in Abhängigkeit von der zweiten verschlüsselten Kennung ID2_encr und in Abhängigkeit von dem aktuell gültigen Sitzungsschlüssel dk(i) ermittelt. In einem Schritt 318 wird der zweite Sitzungsschlüssel dk(i+1) als aktuell gültiger Sitzungsschlüssel auswählt. In einem Schritt 320 werden zweite unverschlüsselte Daten D2 ermittelt. Die zweiten verschlüsselten Daten D2_encr werden in Abhängigkeit von den zweiten unverschlüsselten Daten D2 und dem aktuell gültigen zweiten Sitzungsschlüssel dk(i+1) ermittelt. Beispielsweise umfassen die Daten D2 eine neue Kennung des zweiten Endgeräts NNb. In einem weiteren Beispiel umfassen die Daten D2 eine Geschwindigkeit und/oder eine Position des zweiten Endgeräts NNb.

Die zweiten verschlüsselte Daten D2 werden gemäß einem Pfeil 322 mit der zweiten Kennung ID2 des ersten Endgeräts NNa als Empfangsadresse in Form einer vierten Nachricht M4 auf dem Kanal CH2 direkt in Richtung des ersten Endgeräts NNa versendet, wobei die zweite Kennung ID2 als Klartext gesendet wird.

In einem Schritt 324 wählt das erste Endgerät NNa den zweiten Sitzungsschlüssel dk(i+1) als aktuell gültigen Sitzungsschlüssel aus. Nach Empfang der vierten Nachricht M4 ermittelt das erste Endgerät NNa in einem Schritt 326 die unverschlüsselten Daten D2 in Abhängigkeit von den verschlüsselten Daten D2_encr und in Abhängigkeit von dem aktuell gültigen Sitzungsschlüssel dk(i+1).

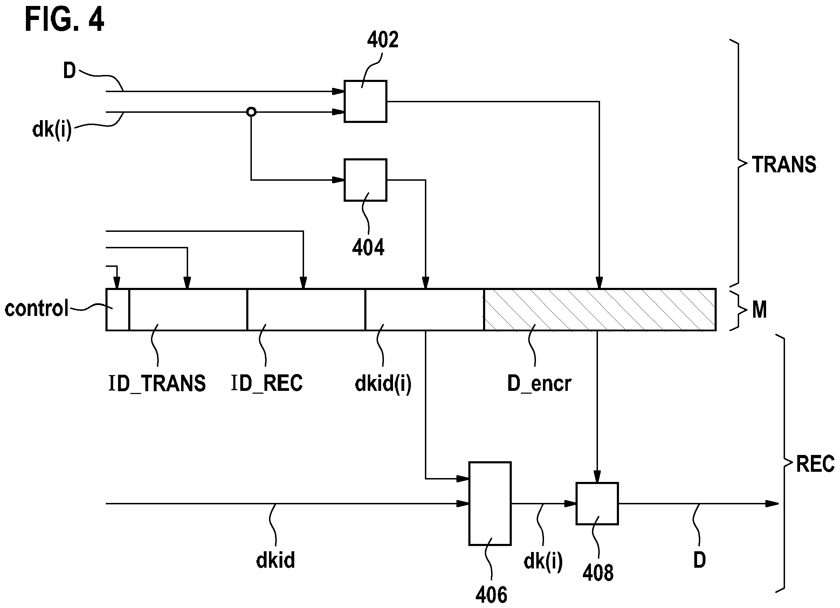

Figur 4 zeigt ein schematisches Blockdiagramm zur Ermittlung und Verarbeitung einer Nachricht M zum Versand auf dem zweiten Kommunikationskanal CH2 der Figuren 2 und 3. Ein Block 402 eines versendenden Endgeräts TRANS verschlüsselt die Klartextdaten D mithilfe des aktuell gültigen Sitzungsschlüssels dk(i) zu verschlüsselten Daten D_encr. Der Block 402 verwendet zur Ermittlung der verschlüsselten Daten D_encr ein Verfahren zur authenticated encryption, beispielsweise AES-CCM (Advanced Encryption Standard Counter Mode).

Ein Block 404 ermittelt eine Schlüsselkennung dkid(i) in Abhängigkeit von dem aktuell gültigen Sitzungsschlüssel dk(i). Beispielsweise werden die unteren 8 Bytes eines SHA-256-Hashes des aktuell gültigen Sitzungsschlüssels dk(i) ermittelt und als Schlüsselkennung dkid(i) verwendet.

Eine Kennung ID_TRANS zur Identifikation des sendenden Endgerät TRANS und eine Kennung ID_REC zur Identifikation des empfangenden Endgerät REC werden vom sendenden Endgerät TRANS in die Nachricht M eingefügt. Die Kontrollinformationen control umfassen eine Information, welche die Nachricht M als Unicast- Nachricht kennzeichnet.

Nach Empfang der Nachricht M durch das empfangende Endgerät REC ermittelt ein Block 406 aus einer Anzahl von Schlüsselkennungen dkid den zu der empfangenen Schlüsselkennung dkid(i) passenden Sitzungsschlüssel dk(i). Ein Block 408 ermittelt die unverschlüsselten Daten D in Abhängigkeit von den empfangenen verschlüsselten Daten D_encr und dem passenden Sitzungsschlüssel dk(i).

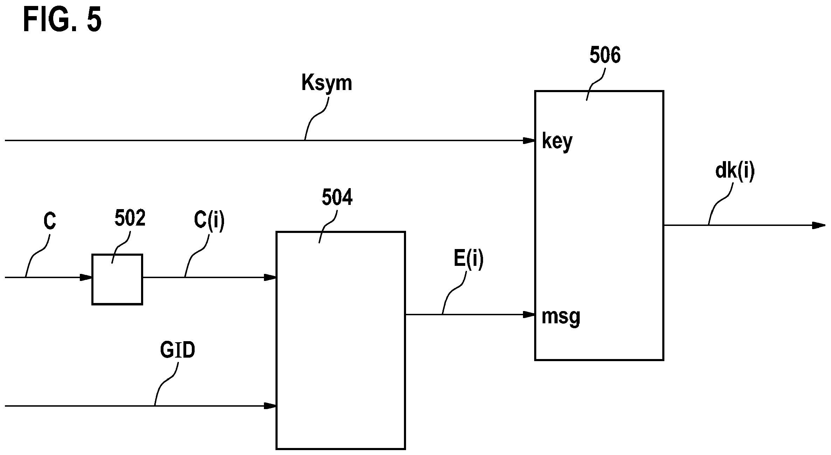

Figur 5 zeigt ein weiteres schematisches Blockdiagramm zur Ermittlung des Sitzungsschlüssels dk(i). Der zufallsbasiert ermittelte oder empfangene Eingangswert C wird einem Block 502 zugeführt, welcher mittels einer Berechnungsvorschrift einen aktuell gültigen Eingangswert C(i) ermittelt. Die Berechnungsvorschrift umfasst beispielsweise ein Inkrementieren oder Dekrementieren des aktuell gültigen Eingangswerts C(i). Ein Block 504 ermittelt in Abhängigkeit von dem aktuell gültigen Eingangswert C(i) und einer Gruppenkennung GID einen weiteren Eingangswert E(i). Ein Block 506 erhält den symmetrischen Schlüssel Ksym an einem Schlüsseleingang key und den weiteren Eingangswert E(i) an einem Nachrichteneingang msg und ermittelt in Abhängigkeit von diesen Eingangsgrö-ßen den Sitzungsschlüssel dk(i). Der Block 506 implementiert einen Message Authentication Code (MAC), insbesondere einen Keyed-Hash Message Authentication Code (HMAC) wie beispielsweise HMAC-SHA256 (SHA: Secure Hash Algorithm).

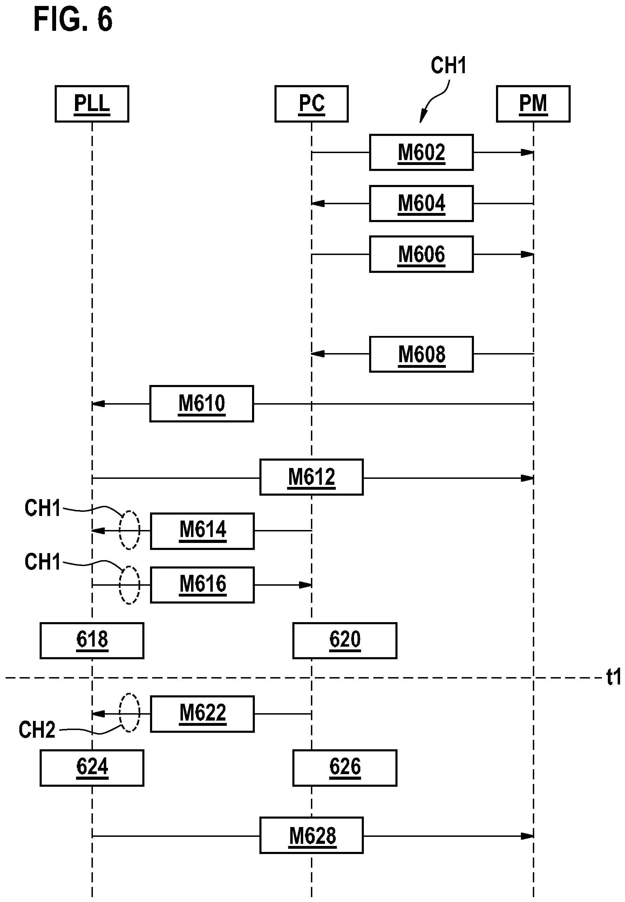

Figur 6 zeigt ein schematisches Sequenzdiagramm zur Aufnahme eines Endgeräts in einen Platoon. Es ist gezeigt, wie ein Platoon-Candidate PC mittels eines Platoon-Managers PM in den Platoon eingefügt wird. Ein Platoon-Leader PLL verwaltet den Platoon und nimmt den Platoon-Candidate PC in den Platoon auf.

In einem Beispiel werden der PLL und der PC auf einem jeweiligen separaten Endgerät ausgeführt und der PM ist Netzbetreiber-seitig angeordnet. In einem weiteren Beispiel werden der PLL und der PM gemeinsam auf einem Endgerät ausgeführt und der PC auf einem anderen Endgerät ausgeführt.

Die direkte Kommunikation zwischen PLL und PC gemäß der D2D-Funkressourcen aus Figur 1 geschieht beispielsweise über einen Sidelink bzw. eine PC5-Schnittstelle. In einem weiteren Beispiel geschieht die direkte Kommunikation zwischen PLL und PC über eine Schnittstelle gemäß IEEE 802.11p. Diese direkte Kommunikation zwischen Endgeräten wird auch als D2D-Kommunikation (D2D: device to device) bezeichnet.

Die Nachrichten zwischen PC und PM sowie zwischen PLL und PM werden gemäß dem zuvor beschriebenen Kanal CH1 signiert und verschlüsselt. Die Nachrichten zwischen PLL und PC werden bis zum Zeitpunkt t1 gemäß den zuvor beschriebenen Kanal CH1 signiert und verschlüsselt. Nach dem Zeitpunkt t1 werden die Nachrichten zwischen PLL und PC gemäß dem zuvor beschriebenen Kanal CH2 gesichert. Beispielsweise sind alle Nachrichten als Unicast-Nachrichten mittels einer Kennung an ein einziges Endgerät adressiert.

Gemäß einer Nachricht M602 übermittelt der PC an den PM eine Anfrage, um einem Platoon beizutreten. Der PM übermittelt in einer Nachricht M604 wenigstens eine Kennung eines Platoons, welchem der PM beitreten könnte. Der PM selektiert eine Kennung des wenigstens einen Platoons
und übermittelt die selektierte Kennung mittels einer Nachricht M606 an den PM. Mittels der Nachricht M608 bestätigt der PM dem PC, dass der PC dem Platoon beitreten soll. Mittels einer Nachricht M610 wird der PC dem PLL als neues Platoon-Mitglied angekündigt. Die Nachrichten M608 und M610 können beispielsweise weitere Parameter wie beispielsweise eine Sollgeschwindigkeit oder ein Zeitpunkt des Beitritts umfassen, um eine Synchronisation des Platoons zu verbessern. Besitzen PLL und PC noch nicht die jeweiligen öffentlichen Schlüssel des jeweiligen anderen Kommunikationspartners, so umfassen die Nachrichten M608 und/oder M610 die jeweiligen öffentlichen Schlüssel des PLL bzw. des PC. Mittels einer Nachricht M612 bestätigt der PLL dem PM, dass die Nachricht M610 empfangen wurde.

Eine Nachricht M614 wird von dem PC direkt an den PLL übersendet und umfasst einen Beitrittsantrag des PC zu dem Platoon. In einer Nachricht M616 übermittelt der PLL den symmetrischen Schlüssel und den Eingangswert an den PC. Mit einer Nachricht M616 akzeptiert der PLL den Beitritt des PC zu dem Platoon. Die Nachricht M616 umfasst beispielsweise eine Kennung des Platoon und/oder eine Indikation zur Berechnungsvorschrift für weitere Eingangswerte in Abhängigkeit von dem übermittelten Eingangswert. Beispielsweise entspricht die Nachricht M616 der Nachricht M1 aus Figur 2, wobei der PLL auf dem ersten Endgerät NNa ausgeführt wird und der PC auf dem zweiten Endgerät NNb ausgeführt wird. In Schritten 618 und 620 ermitteln der PLL und der PC jeweils lokal einen neuen Sitzungsschlüssel. Der Schritt 618 entspricht beispielsweise den Schritten 206 und 208 aus Figur 2. Der Schritt 620 entspricht beispielsweise den Schritten 216 und 218 aus Figur 2.

Mittels einer Nachricht M622 bestätigt der PC dem PLL den Eintritt des PC zu dem Platoon, wobei die Nachricht M622 zumindest teilweise mit dem ermittelten Sitzungsschlüssel verschlüsselt ist, um aufseiten des PLL mit dem lokal ermittelten Sitzungsschlüssel entschlüsselt zu werden. Beispielsweise entspricht die Nachricht M622 der Nachricht M2 aus Figur 2. In den Schritten 624 und 626 ermitteln der PLL und der PC eigenständig einen weiteren Sitzungsschlüssel in Abhängigkeit von einem veränderten, insbesondere inkrementierten Eingangswert.

In einer Nachricht M628 informiert der PLL den PM darüber, dass der PC nunmehr Teil des Platoons ist und übermittelt beispielsweise die Anzahl der Fahrzeuge des Platoons an den PM.

Auf den Empfang der Nachricht M610 hin unterbindet der PLL einen Tausch der eigenen Kennung zur Adressierung, um eine gesicherte Kommunikation mit dem PC, der den öffentlichen Schlüssel des PLL von dem PM mittels der Nachricht M608 empfangen hat, durchzuführen. Nach dem Empfang der Nachricht M622 oder dem Versand der Nachricht M628 kann der Tausch der eigenen Kennung zur Adressierung bzw. der Tausch der Kennungen innerhalb des Platoons fortgesetzt werden.

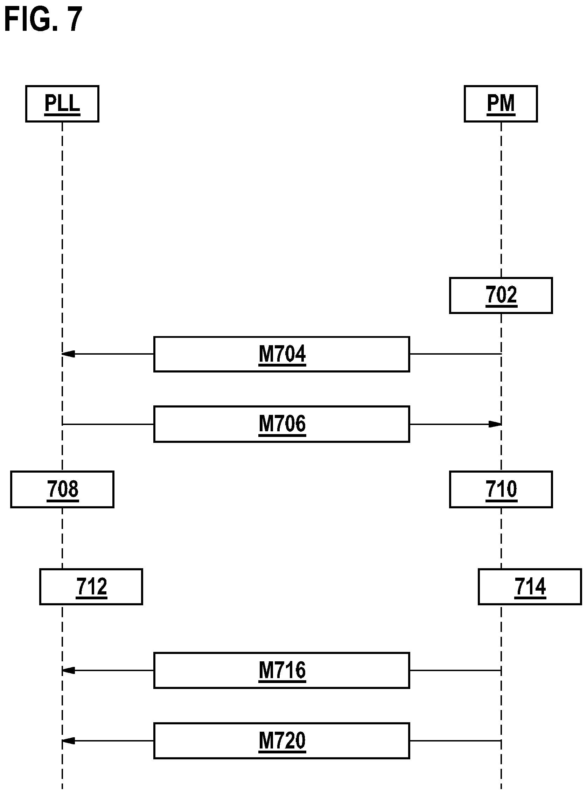

Figur 7 zeigt ein schematisches Sequenzdiagramm zur Intra-Platoon-Kommunikation. Es ist gezeigt, wie der Platoon-Leader PLL mit einem Platoon-Member PLM kommuniziert. Der PLL wird beispielsweise auf dem Endgerät NN1 ausgeführt und der PLM wird beispielsweise auf dem Endgerät NN2 und/oder NN3 ausgeführt.

In einem Schritt 702 wird ermittelt, dass ein Kennungswechsel stattfinden soll, was mittels einer Nachricht M704 dem PLL mitgeteilt wird. Die Nachricht M704 wird zumindest teilweise mit dem aktuell gültigen Sitzungsschlüssel verschlüsselt. Selbstverständlich kann der Schritt 702 und die Nachricht M704 entfallen, wenn der PLL selbstständig ermittelt, dass ein Kennungswechsel stattfinden soll.

Eine Nachricht M706 wird vom PLL an den PLM übermittelt, wobei die Nachricht M706 mit dem aktuell gültigen Sitzungsschlüssel verschlüsselt ist. Die Nachricht M706 weist den PLL an, sowohl seine aktuell gültige Kennung als auch seinen aktuell gültigen Sitzungsschlüssel zu wechseln. Die Nachrichten M704 und 706 umfassen beispielsweise einen Zeitpunkt in der Zukunft, zu dem der Wechsel der Kennung als auch der Wechsel des Sitzungsschlüssels stattfinden sollen. Die Nachricht M706 umfasst die neue Kennung des PLL, sodass der PLM den PLL einfach wiederidentifizieren kann. Die Übermittlung der neuen Kennung des PLL an den PLM ermöglicht dem PLM sich gegen Hijacking-Versuche abzusichern. Beispielsweise entspricht die Nachricht M706 der Nachricht M3 aus Figur 3.

In den Schritten 708 und 710 wechseln der PLL und der PLM sowohl wenigstens eine Kennung und wählen einen weiteren Sitzungsschlüssel als gültigen Sitzungsschlüssel aus. In den Schritten 712 und 714 ermitteln der PLL und der PLM auf Basis eines inkrementierten Eingangswerts einen weiteren noch nicht gültigen Sitzungsschlüssel für einen nächsten Wechselvorgang.

Gemäß einer Nachricht M716 übermittelt der PLM seine neue Kennung zur Adressierung von Nachrichten an den PLL, wobei die Nachricht M716 mit dem aktuell gültigen Sitzungsschlüssel verschlüsselt ist. Die Nachricht M716 stimmt beispielsweise mit der Nachricht M4 aus Figur 3 überein.

Nach dem Wechsel des Sitzungsschlüssels und der jeweiligen Kennung der Platoon-Teilnehmer können Nachrichten M720 zwischen den PLL und dem PLM ausgetauscht werden, wobei die ausgetauschten Nachrichten beispielsweise sich periodisch wiederholende CAMs oder andere Nachrichten wie DENMs sind (CAM: Cooperative Awareness Message; DENM: Decentralized Environmental Notification Message). Mittels der Nachricht M720 wird beispielsweise eine Position und/oder eine Geschwindigkeit an den PLL übermittelt.

Gemäß einem Beispiel ermittelt der PLL einen Wechselplan, d.h. Zeitpunkte in der Zukunft, zu denen sowohl die jeweilige Kennung des Endgeräts als auch der Sitzungsschlüssel gewechselt werden. Der Wechsel der jeweiligen Kennung und des Sitzungsschlüssels erfolgt synchron mit einem Wechsel der Kennungen auf niedrigeren Schichten wie beispielsweise MAC, IP. Dieser Wechselplan kann beispielsweise jedes Mal neu erstellt werden, wenn neue PLMs zu dem Platoon hinzukommen. Der Schritt 702 und die Nachricht 704 könnten damit entfallen und der PLL triggert selbstständig mittels der Nachricht M706 den Wechsel.

Der verwendete Eingangswert hat einen begrenzten Wertebereich, was beispielsweise durch einen Maximalwert bei einer Inkrementierung gekennzeichnet ist (sog. counter wrap). Würde man den Eingangswert wieder auf einen Minimalwert oder den ursprünglich ermittelten Wert setzen, bedeutet das ein Sicherheitsrisiko. Um dieses Sicherheitsrisiko zu reduzieren wird beim Erreichen eines Schwellwerts oder des Maximalwerts des Eingangswerts ein neuer symmetrischer Schlüssel und ein neuer Eingangswert ausgehend von dem PLL an die PLMs verteilt. Beispielsweise kann hierzu die Nachricht N1 bzw. die Nachricht M606 verwendet werden, wobei diese Nachricht mit dem aktuell gültigen Sitzungsschlüssel verschlüsselt wird. Im Beispiel von Figur 2 wird demnach anstatt des Kanals CH1 der Kanal CH2 zum Versenden der Nachricht M1 verwendet.

## Patentansprüche

1. Ein erstes fahrzeugseitiges Endgerät (NNa; NN1; NN4) einer Gruppe von Endgeräten eines Funkkommunikationsnetzwerks, wobei das erste fahrzeugseitige Endgerät (NNa; NN1; NN4) mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das erste fahrzeugseitige Endgerät (NNa; NN1; NN4)
- einen symmetrischen Schlüssel ermittelt,
- einen Eingangswert zufallsbasiert ermittelt,
- eine erste Nachricht umfassend den symmetrischen Schlüssel und den Eingangswert in Richtung eines zweiten fahrzeugseitigen Endgeräts (NNb; NN2; NN3; NN5; NN6) versendet,
- einen Sitzungsschlüssel in Abhängigkeit von dem symmetrischen Schlüssel und in Abhängigkeit von dem Eingangswert ermittelt,
- den ermittelten Sitzungsschlüssel als aktuell gültigen Sitzungsschlüssel auswählt,
- eine zweite Nachricht umfassend verschlüsselte Daten ausgehend von dem zweiten fahrzeugseitigen Endgerät (NNb; NN2; NN3; NN5; NN6) empfängt, und
- unverschlüsselte Daten in Abhängigkeit von den verschlüsselten Daten und dem aktuell gültigen Sitzungsschlüssel ermittelt.

2. Das erste fahrzeugseitige Endgerät (NNa; NN1; NN4) gemäß dem Anspruch 1, wobei das erste Endgerät (NNa; NN1; NN4)
- die erste Nachricht über einen ersten gesicherten Kommunikationskanal in Richtung des zweiten Endgeräts (NNb; NN2; NN3; NN5; NN6) versendet, und
- die zweite Nachricht ausgehend dem zweiten Endgerät (NNb; NN2; NN3; NN5; NN6) über einen zweiten gesicherten Kommunikationskanal empfängt.

3. Das erste fahrzeugseitige Endgerät (NNa; NN1; NN4) gemäß dem Anspruch 1 oder 2, wobei das erste Endgerät (NNa; NN1; NN4) mittels einer ersten Kennung als aktuell gültige Kennung adressiert wird, und wobei das erste Endgerät (NNa; NN1; NN4)
- einen zweiten Eingangswert in Abhängigkeit von dem ermittelten Eingangswert ermittelt,
- einen zweiten Sitzungsschlüssel in Abhängigkeit von dem symmetrischen Schlüssel und in Abhängigkeit von dem zweiten Eingangswert ermittelt,
- eine zweite Kennung zur Adressierung des ersten fahrzeugseitigen Endgeräts (NNa; NN1; NN4) mit dem aktuell gültigen Sitzungsschlüssel verschlüsselt,
- wenigstens die zweite verschlüsselte Kennung in Richtung des zweiten Endgeräts (NNb; NN2; NN3; NN5; NN6) versendet,
- den zweiten Sitzungsschlüssel als aktuell gültigen Sitzungsschlüssel und die zweite Kennung als aktuell gültige Kennung des ersten Endgeräts (NNa; NN1; NN4) auswählt,
- zweite verschlüsselte Daten mit der zweiten Kennung als Empfangsadresse ausgehend von dem zweiten fahrzeugseitigen Endgerät (NNb; NN2; NN3; NN5; NN6) empfängt, und
- zweite unverschlüsselte Daten in Abhängigkeit von den zweiten verschlüsselten Daten und dem aktuell gültigen Sitzungsschlüssel ermittelt.

4. Das erste fahrzeugseitige Endgerät (NNa; NN1; NN4) gemäß Anspruch 3, wobei das erste Endgerät (NNa; NN1; NN4)
- wenigstens eine Wechsel-Nachricht an die Endgeräte der Gruppe über den zweiten Kanal versendet oder die Wechsel-Nachricht von einem der Endgeräte der Gruppe empfängt, wobei die Wechsel-Nachricht einen Wechsel-Zeitpunkt zum geplanten Wechsel des Sitzungsschlüssels und der Kennung indiziert, und
- die Auswahl des zweiten Sitzungsschlüssels und der zweiten Kennung zu dem Wechsel-Zeitpunkt durchführt.

5. Das erste fahrzeugseitige Endgerät (NNa; NN1; NN4) gemäß Anspruch 2, 3 oder 4, wobei das erste Endgerät (NNa; NN1; NN4)
- eine Aufnahme-Nachricht, welche eine potenzielle Aufnahme eines weiteren Endgeräts in die Gruppe indiziert, empfängt,
- die Auswahl des bzw. eines zweiten Sitzungsschlüssels und der bzw. einer zweiten Kennung nach dem Empfang der Aufnahme-Nachricht so lange aussetzt, bis das weitere Endgerät in die Gruppe aufgenommen ist oder eine vorbestimmte Zeitdauer abgelaufen ist.

6. Das erste fahrzeugseitige Endgerät (NNa; NN1; NN4) gemäß einem der vorstehenden Ansprüche, wobei die zweite Nachricht eine Schlüsselkennung umfasst, und wobei das erste Endgerät (NNa; NN1; NN4)
- ein Sitzungsschlüssel einer Anzahl von Sitzungsschlüsseln in Abhängigkeit von der bzw. einer Schlüsselkennung auswählt, und
- die unverschlüsselte Daten in Abhängigkeit von den verschlüsselten Daten und dem ausgewählten Sitzungsschlüssel ermittelt.

7. Ein Verfahren zum Betreiben eines ersten fahrzeugseitigen Endgeräts (NNa; NN1; NN4) einer Gruppe von Endgeräten eines Funkkommunikationsnetzwerks, wobei das Verfahren umfasst:
- Ermitteln eines symmetrischen Schlüssels,
- zufallsbasiertes Ermitteln eines Eingangswerts,
- Versenden einer ersten Nachricht umfassend den symmetrischen Schlüssel und den Eingangswert in Richtung eines zweiten fahrzeugseitigen Endgeräts (NNb; NN2; NN3; NN5; NN6),
- Ermitteln eines Sitzungsschlüssels in Abhängigkeit von dem symmetrischen Schlüssel und in Abhängigkeit von dem Eingangswert,
- Auswählen des ermittelten Sitzungsschlüssels als aktuell gültigen Sitzungsschlüssel,
- Empfangen einer zweiten Nachricht umfassend verschlüsselte Daten ausgehend von dem zweiten fahrzeugseitigen Endgerät (NNb; NN2; NN3; NN5; NN6), und
- Ermitteln von unverschlüsselten Daten in Abhängigkeit von den verschlüsselten Daten und dem aktuell gültigen Sitzungsschlüssel.

8. Ein zweites fahrzeugseitiges Endgerät (NNb; NN2; NN3; NN5; NN6) eines Funkkommunikationsnetzwerks, wobei das zweite fahrzeugseitige Endgerät (NNb; NN2; NN3; NN5; NN6) mindestens einen Prozessor, mindestens einen Speicher mit Computerprogrammcode, mindestens ein Kommunikationsmodul und mindestens eine Antenne umfasst, wobei der Computerprogrammcode so konfiguriert ist, dass er mit dem mindestens einen Prozessor, dem mindestens einen Kommunikationsmodul und der mindestens einen Antenne bewirkt, dass das zweite fahrzeugseitige Endgerät (NNb; NN2; NN3; NN5; NN6)
- eine erste Nachricht umfassend einen symmetrischen Schlüssel und einen zufallsbasierten ermittelten Eingangswert ausgehend von einem ersten fahrzeugseitigen Endgerät (NNa; NN1; NN4) empfängt,
- einen Sitzungsschlüssel in Abhängigkeit von dem symmetrischen Schlüssel und in Abhängigkeit von dem Eingangswert ermittelt,
- den ermittelten Sitzungsschlüssel als aktuell gültigen Sitzungsschlüssel auswählt,
- unverschlüsselte Daten ermittelt,
- verschlüsselte Daten in Abhängigkeit von den unverschlüsselten Daten und dem aktuell gültigen Sitzungsschlüssel ermittelt, und
- eine zweite Nachricht umfassend die verschlüsselten Daten in Richtung des ersten fahrzeugseitigen Endgeräts (NNa; NN1; NN4) versendet.

9. Das zweite fahrzeugseitige Endgerät (NNb; NN2; NN3; NN5; NN6) gemäß dem Anspruch 8, wobei das zweite Endgerät (NNb; NN2; NN3; NN5; NN6)
- die erste Nachricht ausgehend von dem ersten Endgerät über einen ersten gesicherten Kommunikationskanal empfängt, und
- die zweite Nachricht über einen zweiten gesicherten Kommunikationskanal versendet.

10. Das zweite Endgerät (NNb; NN2; NN3; NN5; NN6) nach dem Anspruch 8 oder 9, wobei das zweite Endgerät (NNb; NN2; NN3; NN5; NN6)
- einen zweiten Eingangswert in Abhängigkeit von dem empfangenen Ein-gangswert ermittelt,
- einen zweiten Sitzungsschlüssel in Abhängigkeit von dem symmetrischen Schlüssel und in Abhängigkeit von einem zweiten Eingangswert ermittelt,
- eine zweite verschlüsselte Kennung empfängt,
- eine zweite unverschlüsselte Kennung zur Adressierung des ersten fahrzeugseitigen Endgeräts in Abhängigkeit von der zweiten verschlüsselten Kennung und in Abhängigkeit von dem aktuell gültigen Sitzungsschlüssel ermittelt,
- den zweiten Sitzungsschlüssel als aktuell gültigen Sitzungsschlüssel auswählt,
- zweite unverschlüsselte Daten ermittelt,
- zweite verschlüsselte Daten in Abhängigkeit von den zweiten unverschlüsselten Daten und dem aktuell gültigen Sitzungsschlüssel ermittelt, und
- zweite verschlüsselte Daten mit der zweiten Kennung des ersten Endgeräts (NNa; NN1; NN4) als Empfangsadresse in Richtung des ersten Endgeräts (NNa; NN1; NN4) versendet.

11. Das zweite fahrzeugseitige Endgerät (NNb; NN2; NN3; NN5; NN6) gemäß Anspruch 8, wobei das zweite Endgerät (NNb; NN2; NN3; NN5; NN6)
- wenigstens eine Wechsel-Nachricht an die Endgeräte der Gruppe über den zweiten Kanal über einen zweiten Kommunikationskanal versendet oder die Wechsel-Nachricht von einem der Endgeräte der Gruppe über den zweiten Kommunikationskanal empfängt, wobei die Wechsel-Nachricht einen Wechsel-Zeitpunkt zum geplanten Wechsel des Sitzungsschlüssels und der Kennung indiziert, und
- die Auswahl eines zweiten Sitzungsschlüssels und einer zweiten Kennung zu dem Wechsel-Zeitpunkt durchführt.

12. Das zweite fahrzeugseitige Endgerät (NNb; NN2; NN3; NN5; NN6) gemäß einem der vorstehenden Ansprüche, wobei das zweite Endgerät (NNb; NN2; NN3; NN5; NN6)
- eine Schlüsselkennung in Abhängigkeit von dem aktuell gültigen Sitzungsschlüssel ermittelt,
- mit dem aktuell gültigen Sitzungsschlüssel verschlüsselte Daten gemeinsam mit der Schlüsselkennung über einen bzw. den zweiten gesicherten Kommunikationskanal in Richtung des ersten fahrzeugseitigen Endgeräts (NNa; NN1; NN4) versendet.

13. Ein Verfahren zum Betreiben eines zweiten Endgeräts (NNb; NN2; NN3; NN5; NN6) eines Funkkommunikationsnetzwerks, wobei das Verfahren umfasst:
- Empfangen einer ersten Nachricht umfassend einen symmetrischen Schlüssel und einen zufallsbasierten ermittelten Eingangswert ausgehend von einem ersten fahrzeugseitigen Endgerät (NNa; NN1; NN4),
- Ermitteln eines Sitzungsschlüssels in Abhängigkeit von dem symmetrischen Schlüssel und in Abhängigkeit von dem Eingangswert,
- Auswählen des ermittelten Sitzungsschlüssels als aktuell gültigen Sitzungsschlüssel,
- Ermitteln von unverschlüsselten Daten,
- Ermitteln von verschlüsselten Daten in Abhängigkeit von den unverschlüsselten Daten und dem aktuell gültigen Sitzungsschlüssel, und
- Versenden einer zweiten Nachricht umfassend die verschlüsselten Daten in Richtung des ersten fahrzeugseitigen Endgeräts (NNa; NN1; NN4).

## Claims

1. First vehicle-side terminal (NNa; NN1; NN4) of a group of terminals of a radio communication network, wherein the first vehicle-side terminal (NNa; NN1; NN4) comprises at least one processor, at least one memory containing computer program code, at least one communication module and at least one antenna, wherein the computer program code is configured such that it acts with the at least one processor, the at least one communication module and the at least one antenna such that the first vehicle-side terminal (NNa; NN1; NN4)
- determines a symmetric key,
- determines an input value on a random basis,
- sends a first message comprising the symmetric key and the input value in the direction of a second vehicle-side terminal (NNb; NN2; NN3; NN5; NN6),
- determines a session key on the basis of the symmetric key and on the basis of the input value,
- selects the determined session key as currently valid session key,
- receives a second message comprising encrypted data from the second vehicle-side terminal (NNb; NN2; NN3; NN5; NN6), and
- determines unencrypted data on the basis of the encrypted data and the currently valid session key.

2. First vehicle-side terminal (NNa; NN1; NN4) according to Claim 1, wherein the first terminal (NNa; NN1; NN4)
- sends the first message in the direction of the second terminal (NNb; NN2; NN3; NN5; NN6) via a first secure communication channel, and
- receives the second message from the second terminal (NNb; NN2; NN3; NN5; NN6) via a second secure communication channel.

3. First vehicle-side terminal (NNa; NN1; NN4) according to Claim 1 or 2, wherein the first terminal (NNa; NN1; NN4) is addressed by way of a first identifier as currently valid identifier, and wherein the first terminal (NNa; NN1; NN4)
- determines a second input value on the basis of the determined input value,
- determines a second session key on the basis of the symmetric key and on the basis of the second input value,
- encrypts a second identifier for addressing the first vehicle-side terminal (NNa; NN1; NN4) with the currently valid session key,
- sends at least the second encrypted identifier in the direction of the second terminal (NNb; NN2; NN3; NN5; NN6),
- selects the second session key as currently valid session key and the second identifier as currently valid identifier of the first terminal (NNa; NN1; NN4),
- receives second encrypted data containing the second identifier as reception address from the second vehicle-side terminal (NNb; NN2; NN3; NN5; NN6), and
- determines second encrypted data on the basis of the second encrypted data and the currently valid session key.

4. First vehicle-side terminal (NNa; NN1; NN4) according to Claim 3, wherein the first terminal (NNa; NN1; NN4)
- sends at least one change message to the terminals of the group via the second channel or receives the change message from one of the terminals of the group, wherein the change message indicates a change time for the planned change of the session key and the identifier, and
- selects the second session key and the second identifier at the change time.

5. First vehicle-side terminal (NNa; NN1; NN4) according to Claim 2, 3 or 4, wherein the first terminal (NNa; NN1; NN4)
- receives an admission message that indicates potential admission of a further terminal into the group,
- sits out the selection of the or a second session key and the or a second identifier following receipt of the admission message until the further terminal has been admitted into the group or a predetermined duration has elapsed.

6. First vehicle-side terminal (NNa; NN1; NN4) according to one of the preceding claims, wherein the second message comprises a key identifier, and wherein the first terminal (NNa; NN1; NN4)
- selects a session key from a number of session keys on the basis of the or a key identifier, and
- determines the unencrypted data on the basis of the encrypted data and the selected session key.

7. Method for operating a first vehicle-side terminal (NNa; NN1; NN4) of a group of terminals of a radio communication network, wherein the method comprises:
- determining a symmetric key,
- determining an input value on a random basis,
- sending a first message comprising the symmetric key and the input value in the direction of a second vehicle-side terminal (NNb; NN2; NN3; NN5; NN6),
- determining a session key on the basis of the symmetric key and on the basis of the input value,
- selecting the determined session key as currently valid session key,
- receiving a second message comprising encrypted data from the second vehicle-side terminal (NNb; NN2; NN3; NN5; NN6), and
- determining unencrypted data on the basis of the encrypted data and the currently valid session key.

8. Second vehicle-side terminal (NNb; NN2; NN3; NN5; NN6) of a radio communication network, wherein the second vehicle-side terminal (NNb; NN2; NN3; NN5; NN6) comprises at least one processor, at least one memory containing computer program code, at least one communication module and at least one antenna, wherein the computer program code is configured such that it acts with the at least one processor, the at least one communication module and the at least one antenna such that the second vehicle-side terminal (NNb; NN2; NN3; NN5; NN6)
- receives a first message comprising a symmetric key and an input value determined on a random basis from a first vehicle-side terminal (NNa; NN1; NN4),
- determines a session key on the basis of the symmetric key and on the basis of the input value,
- selects the determined session key as currently valid session key,
- determines unencrypted data,
- determines encrypted data on the basis of the unencrypted data and the currently valid session key, and
- sends a second message comprising the encrypted data in the direction of the first vehicle-side terminal (NNa; NN1; NN4).

9. Second vehicle-side terminal (NNb; NN2; NN3; NN5; NN6) according to Claim 8, wherein the second terminal (NNb; NN2; NN3; NN5; NN6)
- receives the first message from the first terminal via a first secure communication channel, and
- sends the second message via a second secure communication channel.

10. Second terminal (NNb; NN2; NN3; NN5; NN6) according to Claim 8 or 9, wherein the second terminal (NNb; NN2; NN3; NN5; NN6)
- determines a second input value on the basis of the received input value,
- determines a second session key on the basis of the symmetric key and on the basis of the second input value,
- receives a second encrypted identifier,
- determines a second unencrypted identifier for addressing the first vehicle-side terminal on the basis of the second encrypted identifier and on the basis of the currently valid session key,
- selects the second session key as currently valid session key,
- determines second unencrypted data,
- determines second encrypted data on the basis of the second unencrypted data and the currently valid session key, and
- transmits second encrypted data with the second identifier of the first terminal (NNa; NN1; NN4) as reception address in the direction of the first terminal (NNa; NN1; NN4).

11. Second vehicle-side terminal (NNb; NN2; NN3; NN5; NN6) according to Claim 8, wherein the second terminal (NNb; NN2; NN3; NN5; NN6)
- sends at least one change message to the terminals of the group via the second channel via a second communication channel or receives the change message from one of the terminals of the group via the second communication channel, wherein the change message indicates a change time for the planned change of the session key and the identifier, and
- selects a second session key and a second identifier at the change time.

12. Second vehicle-side terminal (NNb; NN2; NN3; NN5; NN6) according to one of the preceding claims, wherein the second terminal (NNb; NN2; NN3; NN5; NN6)
- determines a key identifier on the basis of the currently valid session key,
- sends data encrypted with the currently valid session key together with the key identifier in the direction of the first vehicle-side terminal (NNa; NN1; NN4) via a or the second secure communication channel.

13. Method for operating a second terminal (NNb; NN2; NN3; NN5; NN6) of a radio communication network, wherein the method comprises:
- receiving a first message comprising a symmetric key and an input value determined on a random basis from a first vehicle-side terminal (NNa; NN1; NN4),
- determining a session key on the basis of the symmetric key and on the basis of the input value,
- selecting the determined session key as currently valid session key,
- determining unencrypted data,
- determining encrypted data on the basis of the unencrypted data and the currently valid session key, and
- sending a second message comprising the encrypted data in the direction of the first vehicle-side terminal (NNa; NN1; NN4).

## Revendications

1. Premier terminal côté véhicule (NNa ; NN1 ; NN4) d'un groupe de terminaux d'un réseau de radiocommunication, le premier terminal côté véhicule (NNa ; NN1 ; NN4) comprenant au moins un processeur, au moins une mémoire contenant un code de programme d'ordinateur, au moins un module de communication et au moins une antenne, le code de programme d'ordinateur étant configuré de manière à ce qu'il fasse en sorte, au moyen dudit au moins un processeur, dudit au moins un module de communication et de ladite au moins une antenne, que le premier terminal côté véhicule (NNa ; NN1 ; NN4)
- détermine une clé symétrique,
- détermine une valeur d'entrée de manière aléatoire,
- envoie un premier message comprenant la clé symétrique et la valeur d'entrée en direction d'un second terminal côté véhicule (NNb ; NN2 ; NN3 ; NN5 ; NN6),
- détermine une clé de session en fonction de la clé symétrique et en fonction de la valeur d'entrée,
- sélectionne la clé de session déterminée en tant que clé de session actuellement valide,
- reçoive un second message comprenant des données chiffrées en provenance du second terminal côté véhicule (NNb ; NN2 ; NN3 ; NN5 ; NN6), et
- détermine des données non chiffrées en fonction des données chiffrées et de la clé de session actuellement valide.

2. Premier terminal côté véhicule (NNa ; NN1 ; NN4) selon la revendication 1, dans lequel le premier terminal (NNa ; NN1 ; NN4)
- envoie le premier message par l'intermédiaire d'un premier canal de communication sécurisé en direction du second terminal (NNb ; NN2 ; NN3 ; NN5 ; NN6), et
- reçoit le second message en provenance du second terminal (NNb ; NN2 ; NN3 ; NN5 ; NN6) par l'intermédiaire d'un second canal de communication sécurisé.

3. Premier terminal côté véhicule (NNa ; NN1 ; NN4) selon la revendication 1 ou 2, dans lequel le premier terminal (NNa ; NN1 ; NN4) est adressé au moyen d'un premier identifiant en tant qu'identifiant actuellement valide, et dans lequel le premier terminal (NNa ; NN1 ; NN4)
- détermine une seconde valeur d'entrée en fonction de la valeur d'entrée déterminée,
- détermine une seconde clé de session en fonction de la clé symétrique et en fonction de la seconde valeur d'entrée,
- chiffre un second identifiant pour l'adressage du premier terminal côté véhicule (NNa ; NN1 ; NN4) au moyen de la clé de session actuellement valide,
- envoie au moins le second identifiant chiffré en direction du second terminal (NNb ; NN2 ; NN3 ; NN5 ; NN6),
- sélectionne la seconde clé de session en tant que clé de session actuellement valide et le second identifiant en tant qu'identifiant actuellement valide du premier terminal (NNa ; NN1 ; NN4),
- reçoit des secondes données chiffrées au moyen du second identifiant en tant qu'adresse de réception en provenance du second terminal côté véhicule (NNb ; NN2 ; NN3 ; NN5 ; NN6), et
- détermine des secondes données non chiffrées en fonction des secondes données chiffrées et de la clé de session actuellement valide.

4. Premier terminal côté véhicule (NNa ; NN1 ; NN4) selon la revendication 3, dans lequel le premier terminal (NNa ; NN1 ; NN4)
- envoie au moins un message de changement aux terminaux du groupe par l'intermédiaire du second canal ou reçoit le message de changement en provenance de l'un des terminaux du groupe, le message de changement indiquant un instant de changement pour le changement planifié de la clé de session et de l'identifiant, et
- effectue la sélection de la seconde clé de session et du second identifiant à l'instant de changement.

5. Premier terminal côté véhicule (NNa ; NN1 ; NN4) selon la revendication 2, 3 ou 4, dans lequel le premier terminal (NNa ; NN1 ; NN4)
- reçoit un message d'inclusion qui indique l'inclusion potentielle d'un autre terminal dans le groupe,
- suspend la sélection de la ou d'une seconde clé de session et de l'identifiant ou d'un second identifiant après la réception du message d'inclusion jusqu'à ce que l'autre terminal soit inclus dans le groupe ou jusqu'à ce qu'une période de temps prédéterminée se soit écoulée.

6. Premier terminal côté véhicule (NNa ; NN1 ; NN4) selon l'une des revendications précédentes, dans lequel le second message comprend un identifiant de clé, et dans lequel le premier terminal (NNa ; NN1 ; NN4)
- sélectionne une clé de session parmi une pluralité de clés de session en fonction de l'identifiant de clé ou d'un identifiant de clé, et
- détermine des données non chiffrées en fonction des données chiffrées et de la clé de session sélectionnée.

7. Procédé de fonctionnement d'un premier terminal côté véhicule (NNa ; NN1 ; NN4) d'un groupe de terminaux d'un réseau de radiocommunication, le procédé comprenant :
- la détermination d'une clé symétrique,
- la détermination d'une valeur d'entrée de manière aléatoire,
- l'envoi d'un premier message comprenant la clé symétrique et la valeur d'entrée en direction d'un second terminal côté véhicule (NNb ; NN2 ; NN3 ; NN5 ; NN6),
- la détermination d'une clé de session en fonction de la clé symétrique et en fonction de la valeur d'entrée,
- la sélection de la clé de session déterminée en tant que clé de session actuellement valide,
- la réception d'un second message comprenant des données chiffrées en provenance du second terminal côté véhicule (NNb ; NN2 ; NN3 ; NN5 ; NN6), et
- la détermination de données non chiffrées en fonction des données chiffrées et de la clé de session actuellement valide.

8. Second terminal côté véhicule (NNb ; NN2 ; NN3 ; NN5 ; NN6) d'un réseau de radiocommunication, dans lequel le second terminal côté véhicule (NNb ; NN2 ; NN3 ; NN5 ; NN6) comprend au moins un processeur, au moins une mémoire contenant un code de programme d'ordinateur, au moins un module de communication et au moins une antenne, le code de programme d'ordinateur étant configuré de manière à ce qu'il fasse en sorte, au moyen dudit au moins un processeur, dudit au moins un module de communication et de ladite au moins une antenne, que le second terminal côté véhicule (NNb ; NN2 ; NN3 ; NN5 ; NN6)
- reçoive un premier message comprenant une clé symétrique et une valeur d'entrée déterminée de manière aléatoire en provenance d'un premier terminal côté véhicule (NNa ; NN1 ; NN4),
- détermine une clé de session en fonction de la clé symétrique et en fonction de la valeur d'entrée,
- sélectionne la clé de session déterminée en tant que clé de session actuellement valide,
- détermine des données non chiffrées,
- détermine des données chiffrées en fonction des données non chiffrées et de la clé de session actuellement valide, et
- envoie un second message comprenant les données chiffrées en direction du premier terminal côté véhicule (NNa ; NN1 ; NN4).

9. Second terminal côté véhicule (NNb ; NN2 ; NN3 ; NN5 ; NN6) selon la revendication 8, dans lequel le second terminal (NNb ; NN2 ; NN3 ; NN5 ; NN6)
- reçoit le premier message en provenance du premier terminal par l'intermédiaire d'un premier canal de communication sécurisé, et
- envoie le second message par l'intermédiaire d'un second canal de communication sécurisé.

10. Second terminal (NNb ; NN2 ; NN3 ; NN5 ; NN6) selon la revendication 8 ou 9, dans lequel le second terminal (NNb ; NN2 ; NN3 ; NN5 ; NN6)
- détermine une seconde valeur d'entrée en fonction de la valeur d'entrée reçue,
- détermine une seconde clé de session en fonction de la clé symétrique et en fonction d'une seconde valeur d'entrée,
- reçoit un second identifiant chiffré,
- détermine un second identifiant non chiffré pour l'adressage du premier terminal côté véhicule en fonction du second identifiant chiffré et en fonction de la clé de session actuellement valide,
- sélectionne la seconde clé de session en tant que clé de session actuellement valide,
- détermine des secondes données non chiffrées,
- détermine des secondes données chiffrées en fonction des secondes données non chiffrées et de la clé de session actuellement valide, et
- envoie des secondes données chiffrées au moyen du second identifiant du premier terminal (NNa ; NN1 ; NN4) en tant qu'adresse de réception en direction du premier terminal (NNa ; NN1 ; NN4).

11. Second terminal côté véhicule (NNb ; NN2 ; NN3 ; NN5 ; NN6) selon la revendication 8, dans lequel le second terminal (NNb ; NN2 ; NN3 ; NN5 ; NN6)
- envoie au moins un message de changement aux terminaux du groupe par l'intermédiaire du second canal et par l'intermédiaire d'un second canal de communication ou reçoit le message de changement en provenance de l'un des terminaux du groupe par l'intermédiaire du second canal de communication, le message de changement indiquant un instant de changement pour le changement planifié de la clé de session et de l'identifiant, et
- effectue la sélection d'une seconde clé de session et d'un second identifiant à l'instant de changement.

12. Second terminal côté véhicule (NNb ; NN2 ; NN3 ; NN5 ; NN6) selon l'une des revendications précédentes, dans lequel le second terminal (NNb ; NN2 ; NN3 ; NN5 ; NN6)
- détermine un identifiant de clé en fonction de la clé de session actuellement valide,
- envoie des données chiffrées au moyen de la clé de session actuellement valide conjointement avec l'identifiant de clé par l'intermédiaire d'un ou du second canal de communication sécurisé en direction du premier terminal côté véhicule (NNa ; NN1 ; NN4).

13. Procédé de fonctionnement d'un second terminal (NNb ; NN2 ; NN3 ; NN5 ; NN6) d'un réseau de radiocommunication, le procédé comprenant :
- la réception d'un premier message comprenant une clé symétrique et une valeur d'entrée déterminée de manière aléatoire en provenance d'un premier terminal côté véhicule (NNa ; NN1 ; NN4),
- la détermination d'une clé de session en fonction de la clé symétrique et en fonction de la valeur d'entrée,
- la sélection de la clé de session déterminée en tant que clé de session actuellement valide,
- la détermination de données non chiffrées,
- la détermination de données chiffrées en fonction des données non chiffrées et de la clé de session actuellement valide, et
- l'envoi d'un second message comprenant les données chiffrées en direction du premier terminal côté véhicule (NNa ; NN1 ; NN4).
